# FASCICULE DE BREVET EUROPEEN

(11) **EP 3 032 180 B1**
(45) Date de publication et mention de la délivrance du brevet: **01.03.2017**
(21) Numéro de dépôt: 14197109.3
(22) Date de dépôt: 10.12.2014
(51) Int. Cl.: F24D 3/18, F24D 17/02, F24D 19/10, F24F 5/00, F25B 30/02

(54) **Dispositif thermique et procédé d'utilisation d'un tel dispositif**
Thermische Vorrichtung und Einsatzverfahren einer solchen Vorrichtung
Thermal device and method for using such a device

(43) Date de publication de la demande: 15.06.2016
(73) Titulaire: Electricité de France, 75008 Paris (FR)
(72) Inventeur: Cauret, Odile, 77300 Fontainebleau (FR); Vuillermoz, Aurélie, N1 2BA Londres (FR); Laborde, Jean-Luc, 97232 Lamentin Martinique (FR)
(74) Mandataire: Cabinet Plasseraud

(56) Documents cités:
- WO-A2-2011/048415
- DE-U1-202009 007 774
- GB-A- 2 505 655
- US-B1- 8 726 682

## Description

L'invention concerne un dispositif thermique pour une installation de chauffage, de production d'eau chaude sanitaire et/ou de climatisation.

Pour le fonctionnement de telles installations, équipant par exemple un bâtiment, il est connu de les coupler à un dispositif thermique comprenant une pompe à chaleur (ou PAC) géothermique reposant sur l'agencement de capteurs thermiques dans le sol et sur la circulation, entre la pompe à chaleur et ces capteurs, d'un fluide caloporteur permettant le transfert des calories captées par les capteurs vers la pompe à chaleur.

En outre, il est envisageable de doter ce type de dispositifs thermiques d'une source calorifique d'appoint, telle que par exemple un dispositif aérosolaire ou de récupération de chaleur à partir d'eaux grises, et d'y faire également circuler le fluide caloporteur. Une telle configuration est par exemple décrite dans le document US 8 726 682 B1 ou dans FR 2 946 126 A.

Dans ces documents, la pompe à chaleur, les capteurs enterrés et la source d'appoint sont disposés en série au sein du circuit et sont parcourus par le fluide caloporteur dans cet ordre. Cette configuration permet d'augmenter la récupération de chaleur par le circuit dans des circonstances particulières, par exemple dans lesquelles le sol dans lequel les capteurs sont enterrés est à basse température. Toutefois, cette configuration présente également un inconvénient.

Le document GB 2505655 A décrit un dispositif thermique selon le préambule de la revendication 1.

En effet, sous certaines conditions, le passage du fluide caloporteur par le capteur enterré ne fournit pas suffisamment de chaleur au fluide caloporteur pour que la pompe à chaleur fonctionne dans de bonnes conditions.

Aussi, l'invention vient améliorer la situation.

A cet effet, l'invention concerne un dispositif thermique pour une installation de chauffage, et/ou de production d'eau chaude sanitaire et/ou de climatisation, tel que défini dans la revendication 1.

En particulier, les moyens de circulation sont adaptés pour faire circuler le fluide caloporteur au sein du circuit de captage de chaleur selon une séquence selon laquelle, une fois le fluide caloporteur sorti de la pompe à chaleur, ledit fluide caloporteur passe d'abord dans la source calorifique d'appoint puis dans le capteur enterré.

Ainsi, selon cette séquence, le fluide caloporteur passe d'abord par la source d'appoint puis dans les capteurs enterrés. Dans certaines conditions, en particulier lorsque le sol aux alentours des capteurs enterrés est suffisamment chaud, le passage du fluide dans la source d'appoint puis dans les capteurs enterrés permet de maximiser la récupération d'énergie thermique par le circuit de captage. En outre, cette séquence réduit la probabilité d'occurrence de situations dans lesquelles la température du fluide caloporteur en entrée de la pompe à chaleur est trop basse pour que la pompe à chaleur puisse fonctionner avec de bonnes performances.

Selon un autre aspect de l'invention, les moyens de circulation sont également adaptés pour faire circuler le fluide caloporteur au sein du circuit de captage de chaleur selon une deuxième séquence selon laquelle une fois le fluide caloporteur sorti de la pompe à chaleur, ledit fluide caloporteur passe d'abord dans le capteur enterré puis dans la source calorifique d'appoint. Cette caractéristique des moyens de circulation permet d'adapter le sens de circulation du fluide caloporteur aux conditions, en particulier de température du sol dans lequel les capteurs sont enterrés, ce qui permet d'optimiser l'efficacité du dispositif.

Selon un autre aspect de l'invention, les moyens de circulation comprennent une première, une deuxième et une troisième branches de circulation sélectivement activables, la première branche de circulation connectant thermiquement un premier point du circuit de captage agencé entre une sortie de la pompe à chaleur et une entrée de la source calorifique d'appoint à une entrée du capteur enterré, la deuxième branche de circulation connectant thermiquement une sortie du capteur enterré à un deuxième point du circuit de captage agencé entre ledit premier point et l'entrée de la source calorifique d'appoint, la troisième branche connectant thermiquement un troisième point du circuit de captage agencé entre la sortie de la source calorifique d'appoint et l'entrée du capteur enterré à un quatrième point du circuit de captage de chaleur agencé entre la sortie du capteur enterré et l'entrée de la pompe à chaleur.

Selon un autre aspect de l'invention, le dispositif comprend en outre un deuxième circuit de captage connectable thermiquement à la pompe à chaleur, le deuxième circuit de captage comprenant :
- au moins un capteur enterré dit capteur froid, le capteur froid étant différent du capteur enterré du circuit de captage de chaleur,
- un moyen d'échange thermique adapté pour refroidir un équipement,
- et
- un deuxième fluide caloporteur adapté pour circuler au sein du deuxième circuit de captage.

La présence d'un deuxième circuit de captage pouvant être également couplé thermiquement à la pompe à chaleur permet d'augmenter la récupération de chaleur pour le chauffage de l'installation via le dispositif tout en autorisant la satisfaction des besoins en climatisation de l'installation.

Selon un autre aspect de l'invention, le dispositif comprend en outre une deuxième pompe à chaleur comportant un condenseur et un évaporateur, l'évaporateur de la deuxième pompe à chaleur étant connectable thermiquement au deuxième circuit de captage de chaleur.

Ceci permet d'augmenter le prélèvement de chaleur du fluide caloporteur et d'améliorer les performances de refroidissement du dispositif thermique.

Selon un autre aspect de l'invention, la pompe à chaleur et/ou la deuxième pompe à chaleur sont déconnectées thermiquement du deuxième circuit de captage de chaleur en réponse à la détection d'une température du deuxième fluide caloporteur en sortie du au moins un capteur froid ou en entrée du moyen d'échange thermique inférieure à une température cible en entrée du moyen d'échange thermique.

Ceci permet de limiter la consommation électrique du dispositif thermique lorsque le refroidissement fourni par le deuxième circuit de captage en configuration « free-cooling » est suffisante.

Selon un autre aspect de l'invention, le circuit de captage de chaleur est connectable thermiquement au condenseur de la deuxième pompe à chaleur.

Ceci permet de bénéficier d'un effet de couplage avantageux entre les deux circuits de captage, la deuxième pompe à chaleur prélevant des calories au deuxième fluide caloporteur et restituant ces calories au circuit de captage de chaleur.

Selon un autre aspect de l'invention, le dispositif comprend en outre une troisième pompe à chaleur destinée à la production d'eau chaude sanitaire, la troisième pompe à chaleur comprenant un évaporateur connectable thermiquement au circuit de captage de chaleur. L'invention concerne en outre un procédé d'utilisation d'un dispositif thermique tel que défini dans la revendication 6, pour installation de chauffage, et/ou production d'eau chaude sanitaire et/ou de climatisation à laquelle le dispositif thermique est associé, le procédé comprenant une étape de fonctionnement au cours de laquelle la source calorifique d'appoint et la pompe à chaleur sont connectées thermiquement au circuit de captage de chaleur et on fait circuler le fluide caloporteur au sein du circuit de captage de chaleur selon une séquence selon laquelle, une fois le fluide caloporteur sorti de la pompe à chaleur, le fluide caloporteur passe d'abord dans la source calorifique d'appoint puis dans le capteur enterré.

Selon un autre aspect de l'invention, lors du procédé, en utilisant les moyens de circulation, on met en oeuvre ladite séquence lorsque la température du fluide caloporteur en entrée du capteur enterré est inférieure à la température du fluide caloporteur en sortie du capteur enterré et la température du fluide caloporteur en sortie de la source calorifique d'appoint est supérieure à la température du fluide caloporteur en entrée de la source calorifique d'appoint. Selon un autre aspect de l'invention, lors du procédé, en utilisant les moyens de circulation, on met en oeuvre ladite deuxième séquence lorsque la température du fluide caloporteur en entrée du capteur enterré est supérieure à la température du fluide caloporteur en sortie du capteur enterré et la température du fluide caloporteur en sortie de la source calorifique d'appoint est supérieure à la température du fluide caloporteur en entrée de la source calorifique d'appoint.

Selon un autre aspect de l'invention, le procédé comprend :
- une étape de fonctionnement hivernal au cours de laquelle l'installation est utilisée pour chauffer, la pompe à chaleur étant au moins temporairement connectée au circuit de captage de chaleur et prélevant de la chaleur audit circuit de captage de chaleur pour la restituer à un moyen de chauffage de l'installation, et
- une étape de fonctionnement estival au cours de laquelle l'installation n'est pas utilisée pour fournir de la chaleur audit moyen de chauffage.

Selon un autre aspect de l'invention, au cours de l'étape de fonctionnement hivernal, la pompe à chaleur est également connectée thermiquement au deuxième circuit de captage de chaleur et prélève de la chaleur du deuxième fluide caloporteur en réponse à la détection d'une température du deuxième fluide caloporteur en sortie du au moins un capteur froid ou en entrée du moyen d'échange thermique à une valeur supérieure à une température cible en entrée du moyen d'échange thermique.

Selon un autre aspect de l'invention, au cours de l'étape de fonctionnement hivernal, l'installation est utilisée pour produire de l'eau chaude sanitaire, la troisième pompe à chaleur étant connectée thermiquement au circuit de captage de chaleur.

Selon un autre aspect de l'invention, au cours de l'étape de fonctionnement estival, la deuxième pompe à chaleur est connectée thermiquement au circuit de captage de chaleur.

Selon un autre aspect de l'invention, au cours de l'étape de fonctionnement estival, l'installation est utilisée pour climatiser, la deuxième pompe à chaleur étant maintenue connectée au deuxième circuit de captage de chaleur tant que la température du deuxième fluide caloporteur en sortie du au moins un capteur froid est supérieure à la température cible en entrée du moyen d'échange thermique.

Selon un autre aspect de l'invention, au cours de l'étape de fonctionnement estival, on recharge thermiquement le sol dans le voisinage du capteur enterré en utilisant au moins la source calorifique d'appoint.

Selon un autre aspect de l'invention, la source calorifique d'appoint est connectée au circuit de captage de chaleur en réponse au fait que la température du fluide caloporteur en sortie de la source calorifique d'appoint est supérieure à la température du fluide caloporteur en entrée de la source calorifique d'appoint.

L'invention sera mieux comprise à la lecture de la description détaillée qui va suivre, donnée uniquement à tire d'exemple et faite en référence aux Figures illustrées, sur lesquelles :
- la Figure 1 est une illustration du dispositif thermique selon l'invention ;
- la Figure 2 est un logigramme d'un procédé d'utilisation selon l'invention ; et
- les Figures 3 à 5 illustrent le dispositif thermique au cours d'étapes du procédé de la Figure 2.

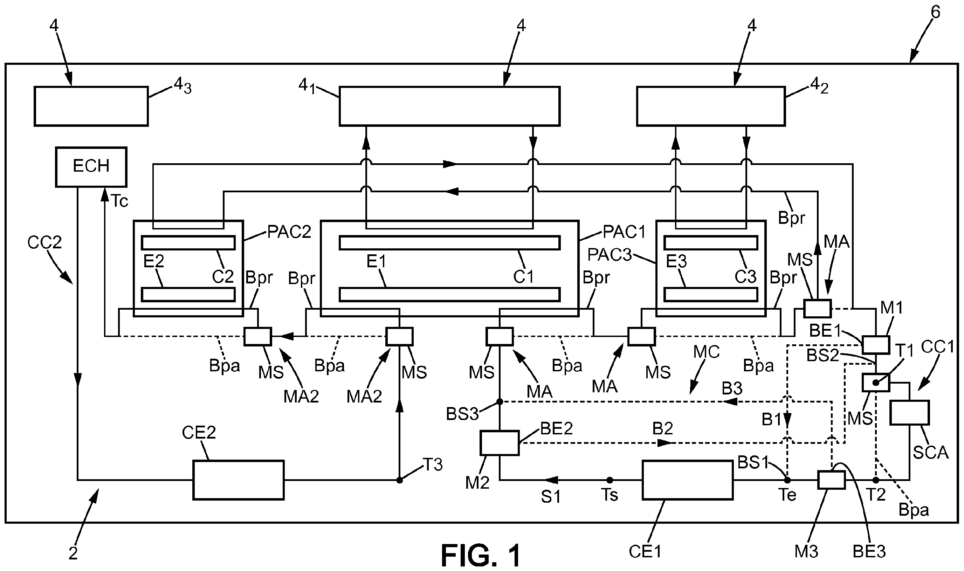

La Figure 1 illustre un dispositif thermique 2 selon l'invention, ci-après dispositif 2.

Le dispositif 2 est couplé à une installation 4 de chauffage et/ou de production d'eau chaude sanitaire et/ou de climatisation pour la satisfaction des besoins correspondants d'une infrastructure 6 à laquelle le dispositif 2 et l'installation 4 sont associées.

L'installation 4 comprend par exemple un moyen de chauffage 4₁, un moyen de production d'eau chaude sanitaire 4₂ et un moyen de climatisation/rafraîchissement 4₃.

Le dispositif 2 comprend une première, une deuxième et une troisième pompes à chaleur, ci-après pompes PAC1, PAC2, PAC3 respectivement. En outre, le dispositif 2 comprend un premier circuit de captage CC1 et un deuxième circuit de captage CC2.

Les pompes PAC1 et PAC2 sont connectables thermiquement au premier circuit de captage CC1 et/ou au deuxième circuit de captage CC2. La PAC3 est connectable thermiquement au premier circuit de captage CC 1.

Par « connectable thermiquement », on entend que chaque pompe PAC1 à PAC3 est adaptée pour être basculée entre une configuration connectée dans laquelle elle échange de la chaleur avec le circuit de captage considéré, et une configuration déconnectée dans laquelle elle n'échange pas de chaleur avec le circuit de captage considéré. La connexion, respectivement la déconnexion d'une pompe à un circuit de captage est obtenue par la mise en marche, respectivement l'extinction de la pompe en question, et/ou par la mise en oeuvre de moyens d'aiguillage décrits ci-après.

Les pompes PAC1 à PAC3 comprennent chacune un condenseur Ci et un évaporateur Ei connectés thermiquement l'un à l'autre. L'évaporateur est prévu pour capter des calories d'un équipement externe à la PACi auquel il est connecté thermiquement, et restituer ces calories via le condenseur à un deuxième équipement externe. Ces pompes sont connues en elles-mêmes et ne seront pas décrites plus en détail.

Les deux circuits de captage CC1 et CC2 sont conçus pour permettre les transferts thermiques entre les équipements connectés à ces circuits. Les deux circuits de captage CC1 et CC2 sont en particulier connectables thermiquement à la pompe à chaleur PAC 1, et plus précisément à son évaporateur.

En outre, le premier circuit de captage CC1 est connectable thermiquement aux deuxième et troisième pompes PAC2, PAC3. Plus particulièrement, le premier circuit de captage CC1 est connectable au condenseur C2 de la deuxième pompe PAC2 et à l'évaporateur E3 de la troisième pompe PAC3.

Par ailleurs, le deuxième circuit de captage CC2 est connectable thermiquement à la deuxième pompe PAC2, et plus particulièrement à son évaporateur E2.

Le premier circuit de captage CC1 forme une boucle chaude du dispositif 2, c'est-à-dire une boucle prévue pour la mise en oeuvre de la fonction de chauffage et éventuellement de la production d'eau chaude sanitaire.

Le premier circuit CC1 comprend une source calorifique d'appoint SCA (ci-après source SCA) et un ou plusieurs capteurs enterrés CE1. Ces différents éléments sont connectés les uns aux autres via un ensemble de conduits définissant une boucle fermée connectant (ou pouvant connecter) en série les pompes PAC1 à PAC3, la source SCA, les capteurs enterrés CE1 et les moyens de circulation. Au sein de ce circuit CC1 circule un fluide caloporteur FC1. Ce fluide caloporteur est par exemple de l'eau glycolée. Le premier circuit CC1 comprend en outre des moyens d'aiguillage MA et des moyens de circulation MC. Par ailleurs, le premier circuit de captage CC1 comprend des sondes de températures pour mesurer la température T1 en entrée de la source SCA, la température T2 en sortie de la source SCA, la température Te en entrée des capteurs enterrés CE1 et la température Ts en sortie des capteurs enterrés.

La source SCA est prévue pour fournir des calories au fluide caloporteur FC1. Cette source SCA se présente par exemple sous la forme d'un ensemble de panneaux solaires ou de capteurs aérosolaires. Ces panneaux ou capteurs sont par exemple disposés sur une toiture de l'infrastructure 6, ou encore sur des pergolas situés à proximité de l'infrastructure 6, ou encore à même le sol.

Les capteurs enterrés CE1 sont enfouis dans le sol aux abords ou sous l'infrastructure 6. Ils sont connectés thermiquement au sol et permettent les échanges thermiques entre le fluide caloporteur FC1 et le sol lui-même. Ces capteurs enterrés CE1 sont par exemple des capteurs de facture connue.

Les moyens d'aiguillage MA sont adaptés pour sélectivement connecter et déconnecter thermiquement les pompes PAC1, PAC2, PAC3 ainsi que la source SCA du circuit de captage CC1. A cet effet, les moyens d'aiguillage MA comprennent, pour chacun de ces éléments, une branche principale Bpr connectant thermiquement le fluide caloporteur à l'équipement considéré lors de son passage au sein de cette branche principale et une branche parallèle Bpa à la branche principale agencée pour isoler thermiquement le fluide caloporteur de l'équipement considéré lors de son passage dans cette branche parallèle. En outre, les moyens d'aiguillage comprennent des mécanismes de sélection MS configurés pour sélectionner la branche par laquelle le fluide caloporteur FC1 doit passer pour chaque paire de branches Bpr/Bpa, c'est-à-dire pour chaque équipement sélectivement connectable au circuit de captage CC1. Ces mécanismes de sélection comprennent par exemple une ou plusieurs vannes contrôlées à l'ouverture et à la fermeture pour la sélection de l'une ou l'autre des branches principale ou parallèle. Le contrôle de ces vannes est décrit plus en détail ci-après.

A noter que le mécanisme de sélection MS associé à la source SCA est configuré pour, lorsque la branche parallèle Bpa correspondante est activée, forcer le passage du fluide caloporteur FC1 à travers la source SCA à fréquence régulière pendant un court laps de temps. Ceci permet d'obtenir une mesure de la température T2 lorsque la source SCA est déconnectée. Ce laps de temps est par exemple de l'ordre de la minute, la fréquence en question étant par exemple d'une fois par heure.

Les branches parallèles et principales et les mécanismes de sélection associés aux pompes PAC1 à PAC3 sont optionnels, la connexion et la déconnexion thermiques des pompes PAC1 à PAC3 au circuit de captage CC1 étant réalisable via la mise en marche et l'extinction des pompes PAC1 à PAC3 elles-mêmes.

Les moyens de circulation MC sont adaptés pour faire circuler le fluide caloporteur FC1 au sein du circuit de captage CC1 selon un sens de circulation S1. A cet effet, les moyens de circulation MC comprennent au moins une pompe de circulation (non représentée).

En outre, les moyens de circulation MC sont adaptés pour faire circuler le fluide caloporteur entre les éléments connectés, et plus particulièrement entre la pompe PAC1, la source SCA et le capteur enterré CE1, selon une première séquence selon laquelle, lorsque ces éléments sont connectés au circuit de captage CC1, une fois sorti de la pompe PAC1, le fluide caloporteur FC1 passe d'abord dans la source SCA puis dans le capteur enterré CE1.

En outre, les moyens de circulation MC sont adaptés pour faire circuler le fluide caloporteur entre la pompe PAC1, la source SCA et le capteur enterré CE1, selon une deuxième séquence selon laquelle, lorsque ces éléments sont connectés au circuit de captage CC1, une fois sorti de la pompe PAC1, le fluide caloporteur FC1 passe d'abord dans le capteur enterré CE1 puis dans la source SCA.

En référence à la Figure 1, les moyens de circulation MC comprennent une première, une deuxième et une troisième branches de circulation B1, B2, B3 respectivement (ci-après branches B1, B2, B3), ces branches connectant chacune fluidiquement deux points du circuit de captage CC1 entre eux. En outre, les moyens de circulation MC comprennent des premier, deuxième et troisième moyens d'activation M1, M2, M3 pour l'activation et la désactivation de la première, de la deuxième, et de la troisième branches B1, B2, B3 respectivement.

Les premiers moyens d'activation M1 sont agencés entre la sortie de la troisième pompe PAC3 et le mécanisme de sélection MS associé à la source SCA. La première branche B1 présente une extrémité d'entrée BE1 au circuit de captage CC1 connecté aux premiers moyens d'activation M1, et une extrémité de sortie BS1 connectée à l'entrée du capteur enterré CE1.

Les deuxièmes moyens d'activation M2 sont agencés en aval de la sortie du capteur enterré CE1. La deuxième branche B2 présente une extrémité d'entrée BE2 connectée aux deuxièmes moyens d'activation M2 et une extrémité de sortie BS2 connectée au circuit CC1 entre les premiers moyens d'activation M1 et le mécanisme de sélection MS associés à la source SCA.

Les troisièmes moyens d'activation M3 sont agencées entre la sortie de la source SCA et l'entrée du capteur enterré CE1. La troisième branche B3 comprend une extrémité d'entrée BE3 connectée aux troisièmes moyens d'activation M3 et une extrémité de sortie BS3 connectée entre les deuxièmes moyens d'activation M2 et le mécanisme de sélection MS associés à la pompe à chaleur PAC 1.

Les moyens d'activation M1, M2, M3 comprennent une ou plusieurs vannes commandées à l'ouverture ou la fermeture pour l'activation et la désactivation de la branche de circulation Bi correspondante.

Comme on le verra par la suite, la première et la deuxième séquences sont mises en oeuvre par activation sélective des branches B1, B2, B3 via les moyens d'activation M1, M2, M3.

A noter que lorsque les moyens d'activation activent la branche associée, ils empêchent également la circulation du fluide caloporteur vers l'aval via la branche du circuit de captage CC1 à laquelle ils sont connectés et qui n'est pas la branche de circulation Bi activable correspondante. A cet effet, ils comprennent par exemple un clapet anti-retour.

A noter que le sens de circulation du fluide caloporteur FC1 au sein des pompes PAC1, PAC2, de la source SCA et du capteur enterré CE1 est toujours le même quelles que soient les branches B1, B2, B3 activées ou désactivées. Aussi, les notions d'entrée et de sortie sont établies relativement au sens de circulation S1.

Toujours en référence à la Figure 1, le deuxième circuit de captage CC2 comprend un moyen d'échange thermique ECH, un ou plusieurs capteurs enterrés CE2 dits capteurs froids et des deuxièmes moyens d'aiguillage MA2. Ces éléments sont connectés entre eux via un ensemble de conduits définissant une deuxième boucle fermée, en l'occurrence une boucle froide, au sein de laquelle circule un deuxième fluide caloporteur FC2. Ce fluide est par exemple également de l'eau glycolée. Le fluide caloporteur FC2 circule au sein du circuit de captage CC2 dans un sens le faisant passer par la pompe PAC1, la pompe PAC2, le moyen d'échange ECH et les capteurs froids CE2 dans cet ordre.

Le moyen d'échange thermique ECH est en connexion thermique avec le moyen de climatisation/rafraichissement 4₃ et est adapté pour prélever des calories de ce moyen 4₃.

Le moyen d'échange thermique ECH échange directement des calories avec le moyen 4₃. Il se présente par exemple sous la forme d'une vanne de mélange entre le fluide caloporteur FC2 et un fluide en provenance du moyen 4₃. Alternativement, le moyen d'échange thermique ECH échange indirectement des calories avec le moyen 4₃. Il se présente alors par exemple sous la forme d'un échangeur thermique permettant l'échange de calories entre le fluide caloporteur FC2 et le moyen 4₃.

Le (ou les) capteur froid CE2 est distinct du capteur enterré CE1. Le capteur froid CE2 est également enterré. En outre, le capteur froid CE2 est par exemple de facture identique à celle du capteur CE1, et est enterré à une profondeur analogue. Toutefois, préférentiellement, le capteur froid CE2 est suffisamment éloigné du capteur enterré CE2 pour n'être influencé au plus que de façon négligeable par les éventuels rejets de calories du capteur enterré CE1 dans le sol.

Les deuxièmes moyens d'aiguillage MA2 sont adaptés pour sélectivement connecter et déconnecter thermiquement la pompe PAC1 et la pompe PAC2 du deuxième circuit CC2.

A cet effet, comme précédemment, les deuxièmes moyens d'aiguillage MA2 comprennent des branches principale et parallèle et des mécanismes de sélection MS pour chacune des pompes PAC1 et PAC2.

A noter que ces moyens d'aiguillage MA2 sont optionnels. Comme précédemment, alternativement, la connexion et la déconnexion des pompes PAC1 et PAC2 au deuxième circuit de captage CC2 est réalisable par les seules mise en marche et extinction des pompes PAC1 et PAC2 elles-mêmes. Toutefois, leur présence ainsi que la présence des moyens d'aiguillage MA sont avantageuses dans certaines conditions, en particulier lorsque l'on souhaite connecter thermiquement la pompe PAC1 à l'un des circuits CC1, CC2 mais pas à l'autre.

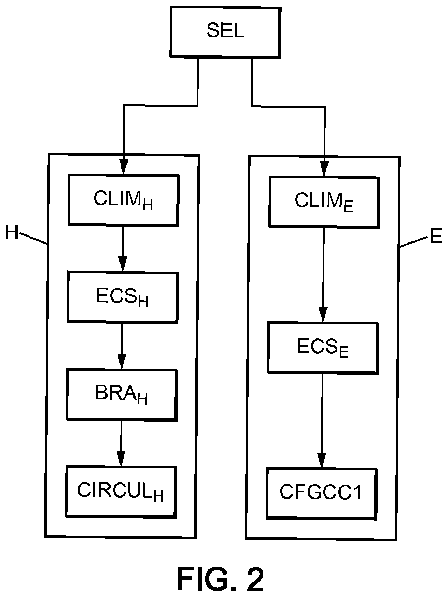

Un procédé d'utilisation du dispositif 2 va maintenant être décrit en référence aux Figures 2 à 4.

Le dispositif 2 présente deux modes de fonctionnement principaux :
- un mode de fonctionnement hivernal dans lequel le dispositif 2 est utilisé au moins pour chauffer l'infrastructure 6 via le moyen de chauffage 4₁, et
- un mode de fonctionnement estival dans lequel le dispositif 2 n'est pas utilisé pour fournir de la chaleur au moyen de chauffage.

Le choix du mode de fonctionnement est conditionné par le besoin ou non de chauffage de l'infrastructure 6.

Le mode de fonctionnement est par exemple sélectionné manuellement, ou encore de manière automatique. Dans ce dernier cas de figure, le mode de fonctionnement est par exemple sélectionné de manière automatique en fonction de la date, de la température extérieure ou de la demande de chauffage du bâtiment. Ainsi, le mode de fonctionnement hivernal est par exemple mis en oeuvre d'octobre à mai, le mode de fonctionnement estival étant mis en oeuvre les autres mois de l'année.

En outre, dans les deux modes de fonctionnement, le dispositif 2 est utilisé pour produire de l'eau chaude sanitaire et éventuellement pour refroidir une partie de l'infrastructure 6, telle une pièce contenant des serveurs informatiques, via le moyen de climatisation/rafraîchissement 4₃.

En référence à la Figure 2, lors d'une étape initiale SEL, on sélectionne le mode de fonctionnement du dispositif 2, c'est-à-dire soit le mode de fonctionnement hivernal, qui donne lieu à une étape de fonctionnement hivernal H, soit le mode de fonctionnement estival, qui donne lieu à une étape de fonctionnement estival E.

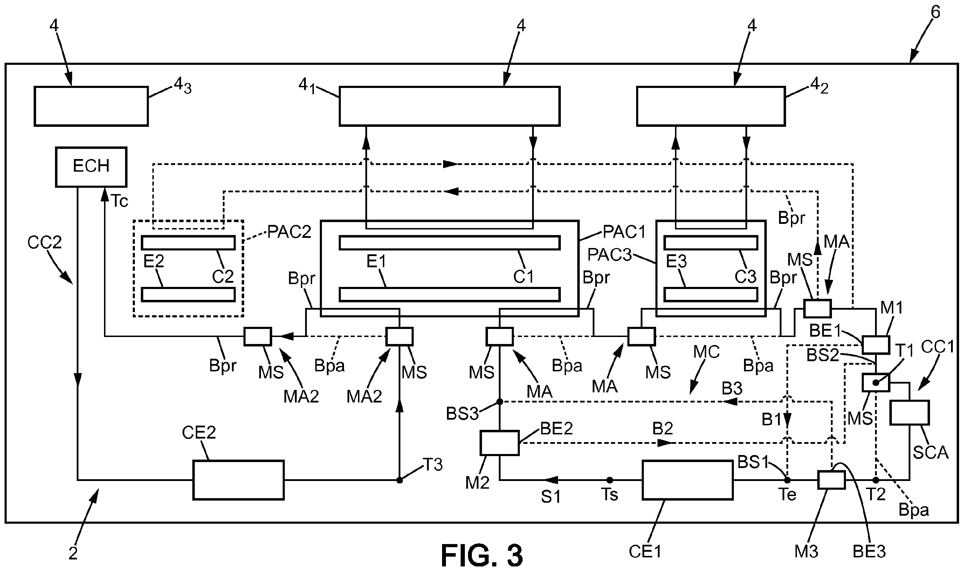

En référence à la Figure 3, lors de l'étape H, le dispositif 2 est utilisé au moins pour chauffer l'infrastructure 6 via la pompe PAC1 et le moyen de chauffage 4₁, comme indiqué précédemment. En outre, la pompe PAC2 est arrêtée, les moyens d'aiguillage MA et MA2 réalisant la déconnexion de la deuxième pompe PAC2 du circuit de captage CC1, respectivement du deuxième circuit de captage CC2.

A noter que lorsque la pompe PAC1 est utilisée pour chauffer l'infrastructure 6, la pompe PAC1 n'est pas maintenue mise en marche de manière continue, mais est éteinte avec une fréquence dépendante des besoins en chauffage de l'infrastructure 6.

Lors d'une sous-étape CLIM_{H} de l'étape H, on détermine la configuration du deuxième circuit de captage CC2 pour la climatisation de l'infrastructure 6 et on applique la configuration déterminée. Trois configurations sont possibles.

Dans une première configuration mise en oeuvre lorsque le moyen de climatisation/rafraîchissement 4₃ ne fonctionne pas, par exemple parce que l'infrastructure 6 n'a pas de besoin en climatisation, la circulation du deuxième fluide FC2 au sein du circuit CC2 est arrêtée.

A l'inverse, dans les deuxième et troisième configurations, le fluide FC2 est mis en circulation, l'infrastructure ayant des besoins en climatisation ou de forts besoins en chauffage.

Dans la deuxième configuration, la pompe PAC1 est connectée au deuxième circuit de captage CC2 via sa mise en marche et/ou via les moyens d'aiguillage MA2. La pompe PAC1 prélève de la chaleur au deuxième fluide caloporteur. Cette configuration est sélectionnée lorsque la température T3 en sortie des capteurs froids CE2 ou en entrée du moyen d'échange ECH est supérieure à une température cible Tc visée en entrée du moyen d'échange. Cette configuration est également sélectionnée lorsque les besoins en chauffage du moyen 4₃ sont supérieurs à un seuil prédéterminé, et ce indépendamment de la comparaison entre les températures T3 et Tc.

Dans une troisième configuration, le fluide caloporteur passe de la sortie des capteurs froids CE2 à l'entrée du moyen d'échange ECH sans passer par la pompe à chaleur PAC1, qui est alors déconnectée thermiquement du deuxième circuit CC2. Cette configuration est sélectionnée lorsque la température T3 est inférieure à la température Tc et que les besoins en chauffage sont inférieurs au seuil prédéterminé.

A noter que cette étape CLIM_{H} se déroule à fréquence régulière, ou encore sur commande en réponse à un évènement, comme une variation prédéterminée de la température T3.

Lors d'une autre sous-étape ECS_{H} de production d'eau chaude sanitaire, la troisième pompe à chaleur PAC3 est connectée au circuit de captage CC1, via sa mise en marche et/ou via les moyens d'aiguillage MA. Cette étape est par exemple déclenchée de manière automatique à fréquence régulière, par exemple de manière quotidienne, et est interrompue après un laps de temps prédéterminé. En pratique, cette étape est mise en oeuvre pour la production d'une quantité d'eau chaude sanitaire suffisante pour les besoins de l'infrastructure 6. La pompe PAC3 est déconnectée du circuit de captage CC1 à l'issue de cette étape.

Lors d'une sous-étape de branchement BRA_{H} de l'étape H, on détermine si la connexion ou non de la source SCA au circuit de captage CC1 doit être opérée, et, le cas échéant, on opère cette connexion. Cette détermination est fonction de la comparaison entre les températures d'entrée T1 et de sortie T2 du fluide FC1 par rapport à la source SCA.

Plus précisément, les moyens d'aiguillage MA déconnectent la source SCA lorsque la température T2 est inférieure à la température T1 La branche parallèle Bpa parallèle à la source SCA est alors empruntée par le fluide caloporteur FC1. En revanche, les moyens d'aiguillage MA connectent la source SCA lorsque la température T2 est supérieure à la température T1.

Cette étape est répétée à fréquence régulière, ou encore sur commande, par exemple en réponse à une variation de la température T1 et/ou de la température T2.

A noter que lorsque la source SCA est connectée thermiquement au circuit CC1 et que les pompes PAC1 et PAC3 en sont déconnectées thermiquement, la source SCA recharge thermiquement le sol autour du capteur CE1.

Lors d'une autre sous-étape CIRCUL_{H} de l'étape H, on détermine la configuration des moyens de circulation MC et on met en oeuvre cette configuration. En particulier, on détermine si les branches B1, B2 et/ou B3 doivent être activées.

Cette détermination est réalisée en fonction des températures d'entrée T1 et de sortie T2 de la source SCA, et des températures d'entrée Te et de sortie Ts du capteur enterré CE1.

Dans le cas de figure où la température T2 est inférieure à la température T1, la source SCA est déconnectée du circuit de captage. Dans ce cas de figure, les branches B1 à B3 sont toutes les trois désactivées. Le fluide caloporteur FC1 emprunte alors le trajet en ligne continue de la Figure 3, à l'exception du fait qu'il emprunte la branche parallèle Bpa de la source SCA (et éventuellement la branche parallèle Bpa de la PAC3 lorsque l'étape ECS_{H} ne se déroule pas en parallèle).

Dans le cas de figure où la température T2 est supérieure à la température T1, deux scénarii sont possibles.

Dans le premier scénario dans lequel la température Ts est supérieure à la température Te, les branches B1 à B3 sont toutes désactivées. Dans ce scénario, le fluide caloporteur FC1 emprunte le trajet en ligne continue sur la Figure 3 (éventuellement modifié au niveau de la pompe PAC3 lorsque celle-ci est désactivée). Dans ce scénario, la première séquence est mise en oeuvre par les moyens de circulation au moins temporairement (c'est-à-dire lorsque la pompe PAC1 est connectée thermiquement au circuit CC1) : une fois sorti de la pompe PAC1, le fluide caloporteur FC1 passe par la source SCA puis par le capteur enterré CE1.

Dans le deuxième scénario, la température Ts est inférieure à la température Te. Les branches B1 à B3 sont alors toutes activées (et les branches du circuit de captage auxquelles les moyens d'activation M1 à M3 sont connectées autres que les branches de circulation B1 à B3 sont fermées par les moyens d'activation M1 à M3).

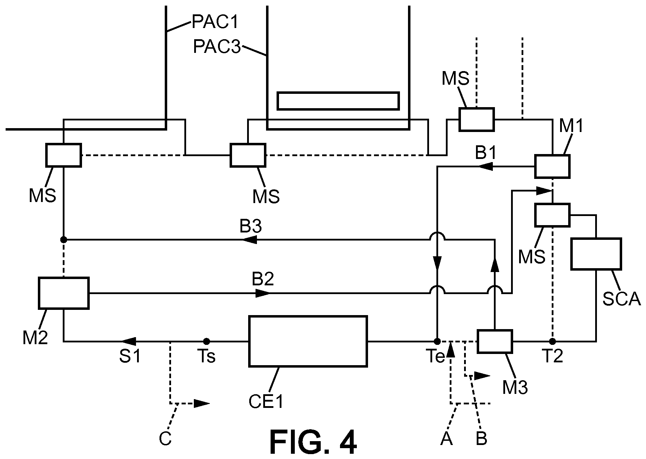

Ce scénario est illustré sur la Figure 4. Une fois sorti de la pompe PAC1 lorsqu'elle est connectée au circuit CC1 (et de la pompe PAC3 lorsqu'elle est connectée), le fluide FC1 emprunte la branche B1 et est ainsi acheminé en entrée du capteur enterré CE1. Une fois sorti du capteur enterré CE1, le fluide emprunte la branche B2, qui l'achemine jusqu'entre les moyens d'activation M1 et le mécanisme de sélection MS de la source SCA. Celui-ci fait transiter le fluide FC1 par la source SCA. Une fois sorti de la source SCA, le fluide caloporteur FC1 emprunte la branche B3, qui l'achemine entre les moyens d'activation M2 et l'entrée de la pompe PAC1. Dans ce scénario, la deuxième séquence est mise en oeuvre par les moyens de circulation au moins temporairement (c'est-à-dire lorsque la pompe PAC1 est connectée thermiquement au circuit CC1).

A noter que dans les deux scénarii ci-dessus, et comme indiqué précédemment, la pompe PAC1 n'est pas nécessairement connectée thermiquement de manière continue au circuit de captage CC1. Lorsque la pompe PAC1 est déconnectée, dans l'un ou l'autre de ces scénarii, le fluide caloporteur FC1 réalise un transfert thermique entre la source SCA et le capteur enterré CE1. Ceci a pour effet de recharger thermiquement le sol dans lequel le capteur enterré CE1 se trouve. En revanche, lorsque la pompe PAC1 est connectée au circuit CC1, la séquence correspondante est mise en oeuvre.

Cette étape CIRCUL_{H} se déroule par exemple à fréquence régulière, ou encore sur commande, par exemple en réponse une variation de la température Te ou de la température Ts.

A noter qu'au cours d'au moins une étape CIRCUL_{H}, la première séquence est mise en oeuvre par les moyens de circulation MC.

A noter que les sous-étapes de l'étape de fonctionnement hivernal H se déroulent dans un ordre quelconque et peuvent se dérouler en parallèle. En outre, elles peuvent se répéter au cours d'une même étape H.

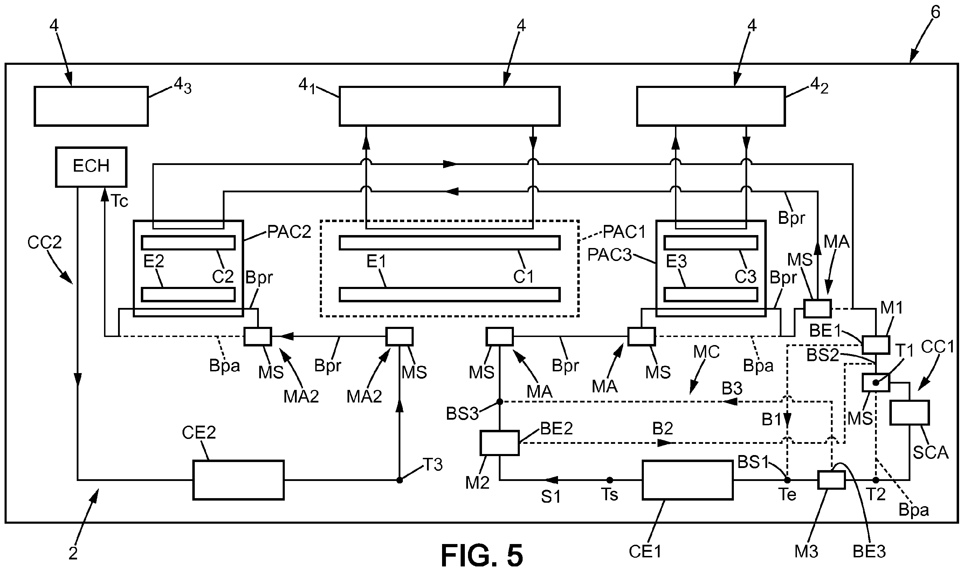

En référence à la Figure 5, lors de l'étape de fonctionnement estival E, le dispositif 2 n'est pas utilisé pour chauffer l'infrastructure 6.La pompe PAC1 est maintenue arrêtée.

Lors d'une sous-étape CLIM_{E} de l'étape E, on détermine la configuration du deuxième circuit de captage CC2 et on met en oeuvre la configuration correspondante.

Trois configurations sont possibles.

Dans une première configuration, le fluide caloporteur FC2 n'est pas mis en circulation dans le circuit CC2. Cette configuration est sélectionnée lorsque l'infrastructure 6 n'a pas de besoin en climatisation. A l'inverse, dans les deuxième et troisième configurations, le fluide FC2 est mis en circulation et l'infrastructure a un besoin en climatisation.

Dans la deuxième configuration, l'évaporateur E2 de la pompe PAC2 est connecté thermiquement au deuxième circuit de captage CC2. Cette configuration est sélectionnée lorsque l'infrastructure 6 a des besoins en climatisation et la température T3 est supérieure à la température cible Tc. Dans cette configuration, l'évaporateur E2 prélève de la chaleur du fluide caloporteur FC2 et en abaisse la température.

Dans la troisième configuration, la pompe PAC2 est déconnectée thermiquement du circuit CC2, le fluide caloporteur FC2 passant de la sortie des capteurs froids CE2 à l'entrée du moyen d'échange ECH sans passer par la pompe PAC2. Cette configuration est sélectionnée lorsque la température T3 est inférieure à la température Tc. Ainsi, le fluide caloporteur FC2 n'a pas besoin de voir sa température abaissée par la pompe PAC2.

Cette étape est par exemple réalisée à fréquence régulière, ou bien sur commande, par exemple en réponse à une variation de la température T3.

Lors d'une sous-étape ECS_{E} de production d'eau chaude sanitaire, la pompe PAC3 est connectée thermiquement au circuit de captage CC1, via sa mise en marche et/ou via les moyens d'aiguillage MA. Cette connexion est maintenue pendant toute la durée de cette étape ECS_{E}, à l'issue de laquelle la pompe PAC3 est à nouveau déconnectée du circuit de captage CC1.

Cette étape est par exemple déclenchée de manière automatique à fréquence régulière, par exemple de manière quotidienne, et est interrompue après un laps de temps prédéterminé.

Lors d'une sous-étape CFGCC1, on détermine la configuration du circuit de captage CC1 en fonction des températures T1 et T2, de la configuration du deuxième circuit de captage CC2, et du fait que l'étape se déroule ou non en parallèle de l'étape ECS_{E}. A noter que cette configuration n'implique pas la connexion et la déconnexion de la pompe PAC3 du circuit de captage CC1, c'est-à-dire que la mise en oeuvre des configurations lors de cette étape ne passe pas par la connexion ou la déconnexion de la pompe PAC3 du circuit CC1.

Trois configurations de circuit de captage CC1 sont possibles.

Dans la première configuration, les moyens de circulation MC ne font pas circuler le fluide caloporteur FC1 au sein du circuit CC1. Cette configuration est sélectionnée lorsque la température T2 est inférieure à la température T1, l'étape ECS_{E} ne se déroule pas en parallèle et le deuxième circuit de captage est dans la première configuration (fluide FC2 ne circulant pas).

A noter que cette configuration a de faibles probabilités d'être sélectionnée.

Dans une deuxième configuration, le fluide caloporteur FC1 est mis en circulation et la source SCA est connectée au circuit CC1 via les moyens d'aiguillage. En outre, les branches B1 à B3 sont désactivées.

Cette configuration est sélectionnée lorsque la température T2 est supérieure à la température T1. Cette configuration est mise en oeuvre que l'étape ECS_{E} se déroule en parallèle ou non et quelle que soit la configuration du deuxième circuit de captage CC2. Dans cette deuxième configuration, le fluide caloporteur recharge thermiquement le sol du fait de l'apport calorifique de la source SCA. Du fait de cette recharge thermique du sol, la température Ts est inférieure à la température Te.

Dans une troisième configuration, le fluide caloporteur FC1 circule et la source SCA est déconnectée du circuit CC1 via les moyens d'aiguillage. Cette configuration est sélectionnée lorsque la température T2 est inférieure à la température T1 et l'étape ECS_{E} se déroule en parallèle. Cette configuration est mise en oeuvre quelle que soit la configuration du deuxième circuit de captage CC2 et quelles que soient les températures Te et Ts.

Dans cette troisième configuration, les capteurs enterrés CE1 fournissent de la chaleur à la pompe PAC3 pour la production d'eau chaude sanitaire.

En outre, comme dans le cadre de l'étape H, les sous-étapes de l'étape E peuvent se dérouler dans n'importe quel ordre et en parallèle ou non.

L'invention présente de nombreux avantages. En effet, la circulation du fluide caloporteur selon la première séquence permet d'améliorer l'efficacité thermique du dispositif 2. En effet, dans certaines conditions, en particulier lorsque le sol aux alentours des capteurs enterrés CE1 est suffisamment chaud, le passage du fluide dans la source SCA puis dans les capteurs enterrés CE1 permet de maximiser la récupération d'énergie thermique. Ainsi, dans l'éventualité où la deuxième séquence était mise en oeuvre dans ces conditions, la récupération de chaleur via les capteurs enterrés CE1 serait telle que la source SCA ne chaufferait que faiblement voire pas du tout le fluide caloporteur.

A noter que ces conditions sont généralement observées à la mi-saison entre l'été et l'hiver, période durant laquelle le sol est encore chaud du fait de son chauffage pendant l'été, l'apport de la source SCA tend à se faire moins important et l'infrastructure 6 commence à avoir des besoins en chauffage. Ceci peut également être observé pendant l'hiver pour de faibles températures extérieures

Par ailleurs, la capacité d'inversion de la circulation relative entre le capteur enterré CE1 et la source SCA fournie par les moyens de circulation MC a pour effet de rendre possible l'adaptation du dispositif 2 aux conditions externes au dispositif 2. En particulier, la première séquence est privilégiée dans les conditions ci-dessus, la deuxième séquence étant privilégiée dans les conditions survenant généralement à la mi-saison hiver/été.

Ainsi, l'efficacité du dispositif thermique en est améliorée d'autant.

Par ailleurs, la présence du deuxième circuit de captage CC2 dédié à la climatisation et également couplé à la pompe PAC1 permet d'assurer de manière optimale et via un unique dispositif les besoins en climatisation et en chauffage et éventuellement en eau chaude sanitaire de l'infrastructure 6. Par ailleurs, le couplage des deux circuits via la pompe à chaleur PAC1 permet de réduire le dimensionnement des équipements du dispositif 2, en particulier des pompes à chaleur et des capteurs enterrés. Ceci est avantageux dans la mesure où ces capteurs sont onéreux en eux-mêmes, complexes à installer et requièrent un minimum de place disponible au sol et en sous-sol.

En outre, ce dimensionnement est optimisé plus avant du fait de la connexion du condenseur de la deuxième pompe à chaleur au circuit de captage CC1, ce qui permet d'augmenter les transferts thermiques dans le sens souhaité entre les deux circuits CC1 et CC2.

Par ailleurs, la connexion sélective de la source SCA permet de limiter les éventuelles pertes que peut générer le passage du fluide caloporteur par la source SCA, notamment en cas de faible température extérieure.

En outre, les moyens d'aiguillage MA et MA2 des deux circuits contribuent également à l'efficacité du dispositif en permettant le court-circuit des équipements du dispositif 2 lorsque le passage du fluide caloporteur en leur sein n'est pas nécessaire ou préjudiciable à l'efficacité thermique du dispositif.

D'autres modes de réalisation sont envisageables.

En particulier, on a décrit une configuration du dispositif dans lequel la pompe PAC3 est connectée en série avec la pompe PAC1. Toutefois, en variante, la pompe PAC3 est connectée en cascade avec la pompe PAC1. Dans cette variante, dans le mode de fonctionnement estival, la pompe PAC1 est mise en fonctionnement pour les besoins de l'étape ESC_{E}.

En outre, en variante, le dispositif 2 comprend plus de trois pompes PAC1 à PAC3 en série ou en parallèle.

En outre, en variante, le condenseur de la pompe PAC2 est connecté à une tour aéroréfrigérante plutôt qu'au circuit de captage de chaleur CC1.

Par ailleurs, en variante encore, le condenseur C1 de la pompe PAC1 est connectable thermiquement au circuit CC1, par exemple via un mécanisme de sélection MS et des branches principale Bpr et parallèle Bpa.

Dans cette variante, lors de la mise en oeuvre du fonctionnement estival, par exemple lors de l'étape CLIM_{E}, et en particulier lors de la mise en oeuvre de la deuxième configuration, le condenseur de la pompe PAC1 est connecté thermiquement au circuit CC1 et l'évaporateur E1 de la pompe PAC1 est connecté au circuit CC2. Ces connexions sont mises en oeuvre parallèlement ou alternativement à la connexion de la pompe PAC2 au deuxième circuit CC2.

Ceci permet le transfert de chaleur entre les deux circuits CC1 et CC2 via la pompe PAC1 seule ou bien en plus de la pompe PAC2. Ceci permet d'améliorer le transfert de chaleur entre ces deux circuits, ou bien de l'autoriser en l'absence de la pompe PAC2. Aussi, dans certaines réalisations de cette variante, le dispositif 2 ne comprend pas de pompe PAC2.

En outre, la description ci-dessus a été faite dans le cas d'un capteur enterré CE1 et d'un capteur froid CE2. Toutefois, le dispositif peut comprend une pluralité de capteurs CE1 et CE2 formant un groupe de capteurs CE1 et un groupe de capteurs CE2. La description ci-dessus s'applique alors aux groupes de capteurs CE1 et CE2 plutôt qu'aux capteurs isolés.

Par ailleurs, dans d'autres modes de réalisation, le sens de circulation du deuxième fluide caloporteur au sein du deuxième circuit CC2 est le sens inverse de celui illustré sur les Figures. Ainsi, dans cette configuration, le fluide FC2 passe dans le capteur froid CE2, puis dans le moyen d'échange ECH, puis éventuellement dans la deuxième pompe PAC2 et éventuellement dans la première pompe PAC1. Toutefois, le sens privilégié est le sens de circulation illustré sur les Figures.

En outre, dans la description ci-dessus, la deuxième pompe PAC2 est connectable au premier circuit de captage CC1 via des conduits raccordés à deux points disposés en série sur une branche du circuit CC1 située entre la sortie de la PAC3 et de la source SCA.

Toutefois, le raccord de ces conduits au circuit de captage peut être réalisé à un autre point du circuit CC1. Par exemple, ces conduits sont raccordés à deux points du circuit CC1 disposés en série entre les moyens d'activation M3 et l'entrée du capteur enterré CE1 (flèches A et B sur la Figure 4). Alternativement, ces points sont connectés pour l'un à proximité de la sortie du capteur enterré et pour l'entrée à proximité de l'entrée du capteur enterré. Ces alternatives sont représentées sous la forme de flèches en pointillés sur la Figure 4 (flèches A et C).

Par ailleurs, dans certains modes de réalisation, le mécanisme de sélection MS de la source SCA comprend une vanne de diversion configurée pour faire passer une partie du fluide caloporteur FC1 par la branche parallèle Bpa de la source SCA alors que la branche principale Bpr de la source SCA est passante. Ceci permet de s'assurer que le débit de fluide caloporteur FC1 dans la branche principale Bpr n'excède pas une valeur limite dont le dépassement pourrait endommager la branche Bpr et éventuellement la source SCA.

En outre, comme indiqué précédemment, les éléments d'aiguillage prévus pour la connexion et la déconnexion des pompes PAC1 à PAC3 des circuits CC1 et CC2 sont optionnels. La connexion et la déconnexion des pompes PAC1 à PAC3 de ces circuits sont alors mises en oeuvre par la mise en marche, respectivement l'extinction des pompes PAC1 à PAC3 elles-mêmes.

Par ailleurs, comme indiqué précédemment, la température T3 est alternativement la température en entrée du moyen d'échange ECH.

## Revendications

1. Dispositif thermique pour une installation (4) de chauffage, et/ou de production d'eau chaude sanitaire et/ou de climatisation, le dispositif thermique comprenant :
- une pompe à chaleur (PAC1), et
- un circuit de captage de chaleur (CC1) connectable thermiquement à la pompe à chaleur (PAC1) et comportant :
- une source calorifique d'appoint (SCA),
- au moins un capteur enterré (CE1),
- un fluide caloporteur (FC1),
- des moyens d'aiguillage (MA) pour la connexion thermique et la déconnexion thermique de la source calorifique d'appoint (SCA) du circuit de captage (CC1), et
- des moyens de circulation (MC) adaptés pour faire circuler le fluide caloporteur au sein du circuit de captage de chaleur,
les moyens de circulation (MC) étant adaptés pour faire circuler le fluide caloporteur au sein de circuit de captage de chaleur selon une séquence selon laquelle, une fois le fluide caloporteur sorti de la pompe à chaleur (PAC1), ledit fluide caloporteur (FC1) passe d'abord dans la source calorifique d'appoint (SCA) puis dans le capteur enterré (CE1),
le dispositif thermique comprenant en outre un deuxième circuit de captage (CC2) connectable à la pompe à chaleur (PAC1), le deuxième circuit de captage (CC2) comprenant :
- au moins un capteur enterré (CE2) dit capteur froid, le capteur froid étant différent du capteur enterré (CE1) du circuit de captage de chaleur (CC1),
- un moyen d'échange thermique (ECH) adapté pour refroidir un équipement, et
- un deuxième fluide caloporteur (FC2) adapté pour circuler au sein du deuxième circuit de captage (CC2)
**caractérisé en ce que** le dispositif comprend en outre une deuxième pompe à chaleur (PAC2) comportant un condenseur (C2) et un évaporateur (E2), l'évaporateur (E2) de la deuxième pompe à chaleur (PAC2) étant connectable thermiquement au deuxième circuit de captage (CC2), le condenseur (C2) de la deuxième pompe à chaleur étant connectable thermiquement au circuit de captage de chaleur (CC1).

2. Dispositif selon la revendication 1, **caractérisé en ce que** les moyens de circulation (MC) sont également adaptés pour faire circuler le fluide caloporteur au sein du circuit de captage de chaleur (CC1) selon une deuxième séquence selon laquelle une fois le fluide caloporteur sorti de la pompe à chaleur (PAC1), ledit fluide caloporteur (FC1) passe d'abord dans le capteur enterré (CE1) puis dans la source calorifique d'appoint (SCA).

3. Dispositif selon la revendication 2, **caractérisé en ce que** les moyens de circulation (MC) comprennent une première, une deuxième et une troisième branches de circulation (B1, B2, B3) sélectivement activables, la première branche de circulation (B1) connectant thermiquement un premier point (BE1) du circuit de captage (CC1) agencé entre une sortie de la pompe à chaleur et une entrée de la source calorifique d'appoint à une entrée du capteur enterré (CE1), la deuxième branche de circulation (B2) connectant thermiquement une sortie du capteur enterré (CE1) à un deuxième point (BS2) du circuit de captage (CC1) agencé entre ledit premier point et l'entrée de la source calorifique d'appoint (SCA), la troisième branche (B3) connectant thermiquement un troisième point (BE3) du circuit de captage (CC1) agencé entre la sortie de la source calorifique d'appoint (SCA) et l'entrée du capteur enterré (CE1) à un quatrième point (BS3) du circuit de captage de chaleur (CC1) agencé entre la sortie du capteur enterré (CE1) et l'entrée de la pompe à chaleur (PAC1).

4. Dispositif selon l'une quelconque des revendications précédentes, **caractérisé en ce que** la pompe à chaleur (PAC1) et/ou la deuxième pompe à chaleur (PAC2) sont déconnectées thermiquement du deuxième circuit de captage (CC2) en réponse à la détection d'une température (T3) du deuxième fluide caloporteur (FC2) en sortie du au moins un capteur froid (CE2) ou en entrée du moyen d'échange thermique (ECH) inférieure à une température cible (Tc) en entrée du moyen d'échange thermique (ECH).

5. Dispositif selon l'une quelconque des revendications précédentes, **caractérisé en ce qu'**il comprend en outre une troisième pompe à chaleur (PAC3) destinée à la production d'eau chaude sanitaire, la troisième pompe à chaleur (PAC3) comprenant un évaporateur (E3) connectable thermiquement au circuit de captage de chaleur (CC1).

6. Procédé d'utilisation d'un dispositif thermique selon l'une quelconque des revendications précédentes pour installation de chauffage, et/ou production d'eau chaude sanitaire et/ou de climatisation à laquelle le dispositif thermique est associé, le procédé comprenant une étape de fonctionnement (CIRCUL_{H}) au cours de laquelle la source calorifique d'appoint (SCA) et la pompe à chaleur (PAC1) sont connectées thermiquement au circuit de captage de chaleur (CC1) et on fait circuler le fluide caloporteur (FC1) au sein du circuit de captage de chaleur selon une séquence selon laquelle, une fois le fluide caloporteur sorti de la pompe à chaleur, le fluide caloporteur (FC1) passe d'abord dans la source calorifique d'appoint (SCA) puis dans le capteur enterré (CE1), le procédé comprenant en outre:
- une étape de fonctionnement hivernal (H) au cours de laquelle l'installation est utilisée pour chauffer, la pompe à chaleur (PAC1) étant au moins temporairement connectée thermiquement au circuit de captage de chaleur (CC1) et prélevant de la chaleur audit circuit de captage de chaleur (CC1) pour la restituer à un moyen de chauffage (4₁) de l'installation, et
- une étape de fonctionnement estival (E) au cours de laquelle l'installation n'est pas utilisée pour fournir de la chaleur audit moyen de chauffage,
dans lequel, au cours de l'étape de fonctionnement hivernal (H), la pompe à chaleur est également connectée thermiquement au deuxième circuit de captage de chaleur et prélève de la chaleur du deuxième fluide caloporteur en réponse à la détection d'une température (T3) du deuxième fluide caloporteur (FC2) en sortie du au moins un capteur froid (CE2) ou en entrée du moyen d'échange thermique (ECH) à une valeur supérieure à une température cible (Tc) en entrée du moyen d'échange thermique (ECH),
**caractérisé en ce qu'**au cours de l'étape de fonctionnement estival (E), la deuxième pompe à chaleur (PAC2) est connectée thermiquement au circuit de captage de chaleur (CC1).

7. Procédé selon la revendication 6, dans lequel, en utilisant les moyens de circulation (MC), on met en oeuvre ladite séquence lorsque la température (Te) du fluide caloporteur (FC1) en entrée du capteur enterré (CE1) est inférieure à la température (Ts) du fluide caloporteur en sortie du capteur enterré (CE1) et la température (T2) du fluide caloporteur (FC1) en sortie de la source calorifique d'appoint (SCA) est supérieure à la température (T1) du fluide caloporteur (FC1) en entrée de la source calorifique d'appoint (SCA).

8. Procédé selon la revendication 6 ou 7, le procédé étant mis en oeuvre par un dispositif thermique (2) selon la revendication 2, dans lequel, en utilisant les moyens de circulation (MC), on met en oeuvre ladite deuxième séquence lorsque la température (Te) du fluide caloporteur (FC1) en entrée du capteur enterré (CE1) est supérieure à la température (Ts) du fluide caloporteur en sortie du capteur enterré (CE1) et la température (T2) du fluide caloporteur (FC1) en sortie de la source calorifique d'appoint (SCA) est supérieure à la température (T1) du fluide caloporteur (FC1) en entrée de la source calorifique d'appoint (SCA).

9. Procédé selon l'une quelconque des revendications 6 à 8, le procédé étant mis en oeuvre par un dispositif thermique selon la revendication 5 , dans lequel, au cours de l'étape de fonctionnement hivernal (H), l'installation est utilisée pour produire de l'eau chaude sanitaire (ECS_{H}), la troisième pompe à chaleur (PAC3) étant connectée thermiquement au circuit de captage de chaleur (CC1).

10. Procédé selon l'une quelconque des revendications 6 à 9, le procédé étant mis en oeuvre au moyen d'un dispositif thermique selon la revendication 4, dans lequel, au cours de l'étape de fonctionnement estival (E), l'installation est utilisée pour climatiser, la deuxième pompe à chaleur (PAC2) étant maintenue connectée thermiquement au deuxième circuit de captage de chaleur tant que la température du deuxième fluide caloporteur (FC2) en sortie du au moins un capteur froid (CE2) est supérieure à la température cible (Tc) en entrée du moyen d'échange thermique (ECH).

11. Procédé selon l'une quelconque des revendications 6 à 10, dans lequel, au cours de l'étape de fonctionnement estival (E), on recharge thermiquement le sol dans le voisinage du capteur enterré (CE1) en utilisant au moins la source calorifique d'appoint (SCA).

12. Procédé selon l'une quelconque des revendications 6 à 11, **caractérisé en ce que** la source calorifique d'appoint (SCA) est connectée thermiquement au circuit de captage de chaleur (CC1) en réponse au fait que la température (T2) du fluide caloporteur (FC1) en sortie de la source calorifique d'appoint est supérieure (T1) à la température du fluide caloporteur en entrée (T1) de la source calorifique d'appoint.

## Patentansprüche

1. Thermische Vorrichtung für eine Anlage (4) zur Heizung und/oder zur Erzeugung von warmem Brauchwasser und/oder zur Klimatisierung, wobei die thermische Vorrichtung umfasst:
- eine Wärmepumpe (PAC1), und
- einen Wärmegewinnungskreis (CC1), der mit der Wärmepumpe (PAC1) thermisch verbindbar ist und aufweist:
- eine Zusatzwärmequelle (SCA),
- wenigstens einen erdverlegten Sensor (CE1),
- ein Wärmeträgerfluid (FC1),
- Weichenmittel (MA) für die thermische Verbindung und die thermische Trennung der Zusatzwärmequelle (SCA) mit bzw. von dem Gewinnungskreis (CC1), und
- Umwälzmittel (MC), die dafür ausgelegt sind, das Wärmeträgerfluid innerhalb des Wärmegewinnungskreises umzuwälzen,
wobei die Umwälzmittel (MC) dafür ausgelegt sind, das Wärmeträgerfluid innerhalb des Wärmegewinnungskreises gemäß einer Folge umzuwälzen, gemäß welcher, nachdem das Wärmeträgerfluid aus der Wärmepumpe (PAC1) ausgetreten ist, das Wärmeträgerfluid (FC1) zuerst die Zusatzwärmequelle (SCA) und danach den erdverlegten Sensor (CE1) durchströmt,
wobei die thermische Vorrichtung außerdem einen zweiten Gewinnungskreis (CC2) umfasst, der mit der Wärmepumpe (PAC1) verbindbar ist, wobei der zweite Gewinnungskreis (CC2) umfasst
- wenigstens einen erdverlegten Sensor (CE2), kalter Sensor genannt, wobei der kalte Sensor von dem erdverlegten Sensor (CE1) des Wärmegewinnungskreises (CC1) verschieden ist,
- ein Wärmeaustauschmittel (ECH), das dafür ausgelegt ist, eine Einrichtung zu kühlen, und
- ein zweites Wärmeträgerfluid (FC2), das dafür ausgelegt ist, innerhalb des zweiten Gewinnungskreises (CC2) zu zirkulieren,
**dadurch gekennzeichnet, dass** die Vorrichtung außerdem eine zweite Wärmepumpe (PAC2) umfasst, die einen Kondensator (C2) und einen Verdampfer (E2) umfasst, wobei der Verdampfer (E2) der zweiten Wärmepumpe (PAC2) mit dem zweiten Gewinnungskreis (CC2) thermisch verbindbar ist, wobei der Kondensator (C2) der zweiten Wärmepumpe mit dem Wärmegewinnungskreis (CC1) thermisch verbindbar ist.

2. Vorrichtung nach Anspruch 1, **dadurch gekennzeichnet, dass** die Umwälzmittel (MC) außerdem dafür ausgelegt sind, das Wärmeträgerfluid innerhalb des Wärmegewinnungskreises (CC1) gemäß einer zweiten Folge umzuwälzen, gemäß welcher, nachdem das Wärmeträgerfluid aus der Wärmepumpe (PAC1) ausgetreten ist, das Wärmeträgerfluid (FC1) zuerst den erdverlegten Sensor (CE1) und danach die Zusatzwärmequelle (SCA) durchströmt.

3. Vorrichtung nach Anspruch 2, **dadurch gekennzeichnet, dass** die Umwälzmittel (MC) einen ersten, einen zweiten und einen dritten Zirkulationsstrang (B1, B2, B3) umfassen, die selektiv aktivierbar sind, wobei der erste Zirkulationsstrang (B1) einen ersten Punkt (BE1) des Gewinnungskreises (CC1), der zwischen einem Ausgang der Wärmepumpe und einem Eingang der Zusatzwärmequelle angeordnet ist, mit einem Eingang des erdverlegten Sensors (CE1) thermisch verbindet, wobei der zweite Zirkulationsstrang (B2) einen Ausgang des erdverlegten Sensors (CE1) mit einem zweiten Punkt (BS2) des Gewinnungskreises (CC1), der zwischen dem ersten Punkt und dem Eingang der Zusatzwärmequelle (SCA) angeordnet ist, thermisch verbindet, wobei der dritte Strang (B3) einen dritten Punkt (BE3) des Gewinnungskreises (CC1), der zwischen dem Ausgang der Zusatzwärmequelle (SCA) und dem Eingang des erdverlegten Sensors (CE1) angeordnet ist, mit einem vierten Punkt (BS3) des Wärmegewinnungskreises (CC1), der zwischen dem Ausgang des erdverlegten Sensors (CE1) und dem Eingang der Wärmepumpe (PAC1) angeordnet ist, thermisch verbindet.

4. Vorrichtung nach einem der vorhergehenden Ansprüche, **dadurch gekennzeichnet, dass** die Wärmepumpe (PAC1) und/oder die zweite Wärmepumpe (PAC2) in Reaktion auf die Erkennung einer Temperatur (T3) des zweiten Wärmeträgerfluids (FC2) am Ausgang des wenigstens einen kalten Sensors (CE2) oder am Eingang des Wärmeaustauschmittels (ECH), die niedriger als eine Zieltemperatur (Tc) am Eingang des Wärmeaustauschmittels (ECH) ist, von dem zweiten Gewinnungskreis (CC2) thermisch getrennt werden.

5. Vorrichtung nach einem der vorhergehenden Ansprüche, **dadurch gekennzeichnet, dass** sie außerdem eine dritte Wärmepumpe (PAC3) umfasst, die für die Erzeugung von warmem Brauchwasser bestimmt ist, wobei die dritte Wärmepumpe (PAC3) einen Verdampfer (E3) umfasst, der mit dem Wärmegewinnungskreis (CC1) thermisch verbindbar ist.

6. Verfahren zur Verwendung einer thermischen Vorrichtung nach einem der vorhergehenden Ansprüche für eine Anlage zur Heizung und/oder zur Erzeugung von warmem Brauchwasser und/oder zur Klimatisierung, welcher die thermische Vorrichtung zugeordnet ist, wobei das Verfahren einen Betriebsschritt (CIRCUL_{H}) umfasst, in dessen Verlauf die Zusatzwärmequelle (SCA) und die Wärmepumpe (PAC1) mit dem Wärmegewinnungskreis (CC1) thermisch verbunden sind und das Wärmeträgerfluid (FC1) innerhalb des Wärmegewinnungskreises gemäß einer Folge umgewälzt wird, gemäß welcher, nachdem das Wärmeträgerfluid aus der Wärmepumpe ausgetreten ist, das Wärmeträgerfluid (FC1) zuerst die Zusatzwärmequelle (SCA) und danach den erdverlegten Sensor (CE1) durchströmt, wobei das Verfahren außerdem umfasst:
- einen Schritt des Winterbetriebs (H), in dessen Verlauf die Anlage zum Heizen verwendet wird, wobei die Wärmepumpe (PAC1) wenigstens zeitweilig mit dem Wärmegewinnungskreis (CC1) thermisch verbunden wird und Wärme aus dem Wärmegewinnungskreis (CC1) entnimmt, um sie an ein Heizmittel (4₁) der Anlage abzugeben, und
- einen Schritt des Sommerbetriebs (E), in dessen Verlauf die Anlage nicht verwendet wird, um dem Heizmittel Wärme zu liefern,
wobei im Verlaufe des Schrittes des Winterbetriebs (H) die Wärmepumpe auch mit dem zweiten Wärmegewinnungskreis thermisch verbunden wird und in Reaktion auf die Erkennung einer Temperatur (T3) des zweiten Wärmeträgerfluids (FC2) am Ausgang des wenigstens einen kalten Sensors (CE2) oder am Eingang des Wärmeaustauschmittels (ECH) mit einem Wert, der höher als eine Zieltemperatur (Tc) am Eingang des Wärmeaustauschmittels (ECH) ist, Wärme des zweiten Wärmeträgerfluids entnimmt, **dadurch gekennzeichnet, dass** im Verlaufe des Schrittes des Sommerbetriebs (E) die zweite Wärmepumpe (PAC2) mit dem Wärmegewinnungskreis (CC1) thermisch verbunden wird.

7. Verfahren nach Anspruch 6, wobei, unter Verwendung der Umwälzmittel (MC), die Folge durchgeführt wird, wenn die Temperatur (Te) des Wärmeträgerfluids (FC1) am Eingang des erdverlegten Sensors (CE1) niedriger als die Temperatur (Ts) des Wärmeträgerfluids am Ausgang des erdverlegten Sensors (CE1) ist und die Temperatur (T2) des Wärmeträgerfluids (FC1) am Ausgang der Zusatzwärmequelle (SCA) höher als die Temperatur (T1) des Wärmeträgerfluids (FC1) am Eingang der Zusatzwärmequelle (SCA) ist.

8. Verfahren nach Anspruch 6 oder 7, wobei das Verfahren von einer thermischen Vorrichtung (2) nach Anspruch 2 durchgeführt wird, wobei, unter Verwendung der Umwälzmittel (MC), die zweite Folge durchgeführt wird, wenn die Temperatur (Te) des Wärmeträgerfluids (FC1) am Eingang des erdverlegten Sensors (CE1) höher als die Temperatur (Ts) des Wärmeträgerfluids am Ausgang des erdverlegten Sensors (CE1) ist und die Temperatur (T2) des Wärmeträgerfluids (FC1) am Ausgang der Zusatzwärmequelle (SCA) höher als die Temperatur (T1) des Wärmeträgerfluids (FC1) am Eingang der Zusatzwärmequelle (SCA) ist.

9. Verfahren nach einem der Ansprüche 6 bis 8, wobei das Verfahren von einer thermischen Vorrichtung nach Anspruch 5 durchgeführt wird, wobei im Verlaufe des Schrittes des Winterbetriebs (H) die Anlage verwendet wird, um warmes Brauchwasser (ECS_{H}) zu erzeugen, wobei die dritte Wärmepumpe (PAC3) mit dem Wärmegewinnungskreis (CC1) thermisch verbunden wird.

10. Verfahren nach einem der Ansprüche 6 bis 9, wobei das Verfahren mittels einer thermischen Vorrichtung nach Anspruch 4 durchgeführt wird, wobei im Verlaufe des Schrittes des Sommerbetriebs (E) die Anlage zur Klimatisierung verwendet wird, wobei die zweite Wärmepumpe (PAC2) mit dem zweiten Wärmegewinnungskreis thermisch verbunden gehalten wird, solange die Temperatur des zweiten Wärmeträgerfluids (FC2) am Ausgang des wenigstens einen kalten Sensors (CE2) höher als die Zieltemperatur (Tc) am Eingang des Wärmeaustauschmittels (ECH) ist.

11. Verfahren nach einem der Ansprüche 6 bis 10, wobei im Verlaufe des Schrittes des Sommerbetriebs (E) der Boden in der Umgebung des erdverlegten Sensors (CE1) unter Verwendung wenigstens der Zusatzwärmequelle (SCA) thermisch geladen wird.

12. Verfahren nach einem der Ansprüche 6 bis 11, **dadurch gekennzeichnet, dass** die Zusatzwärmequelle (SCA) in Reaktion auf die Tatsache, dass die Temperatur (T2) des Wärmeträgerfluids (FC1) am Ausgang der Zusatzwärmequelle höher (T1) als die Temperatur des Wärmeträgerfluids am Eingang (T1) der Zusatzwärmequelle ist, mit dem Wärmegewinnungskreis (CC1) thermisch verbunden wird.

## Claims

1. Thermal device for a facility (4) for heating and/or producing domestic hot water and/or air conditioning, the thermal device comprising:
- a heat pump (PAC1), and
- a heat collector circuit (CC1) that can be thermally connected to the heat pump (PAC1) and comprises:
-- an auxiliary heat source (SCA),
-- at least one underground collector (CE1),
-- a heat transfer fluid (FC1),
-- switching means (MA) for the thermal connection and thermal disconnection of the auxiliary heat source (SCA) to and from the collector circuit (CC1), and
-- circulation means (MC) suitable for circulating the heat transfer fluid in the heat collector circuit,
the circulation means (MC) being suitable for circulating the heat transfer fluid in the heat collector circuit using a sequence in which, once the heat transfer fluid exits the heat pump (PAC1), said heat transfer fluid (FC1) first passes through the auxiliary heat source (SCA) and then through the underground collector (CE1),
the thermal device further comprising a second collector circuit (CC2) that can be connected to the heat pump (PAC1), the second collector circuit (CC2) comprising:
- at least one underground collector (CE2) called cold collector, the cold collector being different from the underground collector (CE1) of the heat collector circuit (CC1),
- a heat exchange means (ECH) suitable for cooling a piece of equipment, and
- a second heat transfer fluid (FC2) suitable for circulating in the second collector circuit (CC2),
**characterised in that** the device further comprises a second heat pump (PAC2) comprising a condenser (C2) and an evaporator (E2), the evaporator (E2) of the second heat pump (PAC2) being thermally connectable to the second collector circuit (CC2), the condenser (C2) of the second heat pump being thermally connectable to the heat collector circuit (CC1).

2. Device according to claim 1, **characterised in that** the circulation means (MC) are also suitable for circulating the heat transfer fluid in the heat collector circuit (CC1) using a second sequence in which, once the heat transfer fluid exits the heat pump (PAC1), said heat transfer fluid (FC1) first passes through the underground collector (CE1) and then through the auxiliary heat source (SCA).

3. Device according to claim 2, **characterised in that** the circulation means (MC) comprise a first, a second and a third circulation branch (B1, B2, B3) that can be selectively activated, the first circulation branch (B1) thermally connecting a first point (BE1) of the collector circuit (CC1) arranged between an output of the heat pump and an intake of the auxiliary heat source to an intake of the underground collector (CE1), the second circulation branch (B2) thermally connecting an output of the underground collector (CE1) to a second point (BS2) of the collector circuit (CC1) arranged between said first point and the intake of the auxiliary heat source (SCA), the third circulation branch (B3) thermally connecting a third point (BE3) of the collector circuit (CC1) arranged between the output of the auxiliary heat source (SCA) and the intake of the underground collector (CE1) to a fourth point (BS3) of the heat collector circuit (CC1) arranged between the output of the underground collector (CE1) and the intake of the heat pump (PAC1).

4. Device according to one of the previous claims, **characterised in that** the heat pump (PAC1) and/or the second heat pump (PAC2) are thermally disconnected from the second collector circuit (CC2) in response to the detection of a temperature (T3) of the second heat transfer fluid (FC2) at the output of the at least one cold collector (CE2) or at the intake of the heat exchange means (ECH) that is less than a target temperature (Tc) at the intake of the heat exchange means (ECH).

5. Device according to one of the previous claims, **characterised in that** said device further comprises a third heat pump (PAC3) intended for the production of domestic hot water, the third heat pump (PAC3) comprising an evaporator (E3) that can be thermally connected to the heat collector circuit (CC1).

6. Method for using a thermal device according to one of the previous claims for a facility for heating and/or producing domestic hot water and/or air conditioning with which the thermal device is associated, the method comprising an operating step (CIRCUL_{H}) during which the auxiliary heat source (SCA) and the heat pump (PAC1) are thermally connected to the heat collector circuit (CC1) and the heat transfer fluid (FC1) is circulated in the heat collector circuit using a sequence in which, once the heat transfer fluid exits the heat pump, the heat transfer fluid (FC1) first passes through the auxiliary heat source (SCA) and then through the underground collector (CE1), the method further comprising:
- a winter operating step (H) during which the facility is used for heating, the heat pump (PAC1) being at least temporarily thermally connected to the heat collector circuit (CC1) and taking heat from said heat collector circuit (CC1) in order to return said heat to a heating means (4₁) of the facility, and
- a summer operating step (E) during which the facility is not used to provide heat to said heating means,
wherein during the winter operating step (H), the heat pump is also thermally connected to the second heat collector circuit and takes heat from the second heat transfer fluid in response to the detection of a temperature (T3) of the second heat transfer fluid (FC2) at the output of the at least one cold collector (CE2) or at the intake of the heat exchange means (ECH) that has a value greater than a target temperature (Tc) at the intake of the heat exchange means (ECH),
**characterised in that** during the summer operating step (E), the second heat pump (PAC2) is thermally connected to the heat collector circuit (CC1).

7. Method according to claim 6, wherein when using the circulation means (MC), said sequence is implemented when the temperature (Te) of the heat transfer fluid (FC1) at the intake of the underground collector (CE1) is less than the temperature (Ts) of the heat transfer fluid at the output of the underground collector (CE1) and the temperature (T2) of the heat transfer fluid (FC1) at the output of the auxiliary heat source (SCA) is greater than the temperature (T1) of the heat transfer fluid (FC1) at the intake of the auxiliary heat source (SCA).

8. Method according to claim 6 or 7, the method being implemented by a thermal device (2) according to claim 2, wherein when using the circulation means (MC), said second sequence is implemented when the temperature (Te) of the heat transfer fluid (FC1) at the intake of the underground collector (CE1) is greater than the temperature (Ts) of the heat transfer fluid at the output of the underground collector (CE1) and the temperature (T2) of the heat transfer fluid (FC1) at the output of the auxiliary heat source (SCA) is greater than the temperature (T1) of the heat transfer fluid (FC1) at the intake of the auxiliary heat source (SCA).

9. Method according to one of claims 6 to 8, the method being implemented by a thermal device according to claim 5, wherein, during the winter operating step (H), the facility is used to produce domestic hot water (ECS_{H}), the third heat pump (PAC3) being thermally connected to the heat collector circuit (CC1).

10. Method according to one of claims 6 to 9, the method being implemented via a thermal device according to claim 4, wherein during the summer operating step (E), the facility is used for air conditioning, the second heat pump (PAC2) being maintained thermally connected to the second heat collector circuit as long as the temperature of the second heat transfer fluid (FC2) at the output of the at least one cold collector (CE2) is greater than the target temperature (Tc) at the intake of the heat exchange means (ECH).

11. Method according to one of claims 6 to 10, wherein during the summer operating step (E), the ground around the underground collector (CE1) is thermally recharged by using at least the auxiliary heat source (SCA).

12. Method according to one of claims 6 to 11, **characterised in that** the auxiliary heat source (SCA) is thermally connected to the heat collector circuit (CC1) in response to the temperature (T2) of the heat transfer fluid (FC1) at the output of the auxiliary heat source being greater (T1) than the temperature of the heat transfer fluid at the intake (T1) of the auxiliary heat source.
